# EUROPÄISCHE PATENTSCHRIFT

(11) **EP 3 007 330 B1**
(45) Veröffentlichungstag und Bekanntmachung des Hinweises auf die Patenterteilung: **13.09.2017**
(21) Anmeldenummer: 15187775.0
(22) Anmeldetag: 30.09.2015
(51) Int. Cl.: H02K 3/52, H02K 3/28, H02K 5/02, H02K 9/19, H02K 9/22, H02K 15/14

(54) **ELEKTRONISCH KOMMUTIERTER GLEICHSTROMMOTOR, INSBESONDERE FÜR EINE ÖLPUMPE**
ELECTRONICALLY COMMUTATED DC MOTOR, IN PARTICULAR FOR AN OIL PUMP
MOTEUR À COURANT CONTINU À COMMUTATION ÉLECTRIQUE, EN PARTICULIER POUR UNE POMPE À HUILE

(30) Priorität: 06.10.2014 DE 102014220201
(43) Veröffentlichungstag der Anmeldung: 13.04.2016
(73) Patentinhaber: Bühler Motor GmbH, 90459 Nürnberg (DE); MELECS EWS GmbH & Co KG, 7011 Siegendorf (AT); Swoboda KG, 87487 Wiggensbach (DE)
(72) Erfinder: Böhm, Ralph, Dr., 78351 Bodman-Ludwigshafen (DE); Bernreuther, Georg, 90449 Nürnberg (DE); Richter, Olaf, 90547 Stein (DE); Wall, Andreas, 90453 Nürnberg (DE); Hellinger, Leopold, 3710 Ziersdorf (AT); Neumann, Gerhard, 3231 St. Margarethen (AT); Koch, Armin, 6807 Feldkirch (AT); Woschni, Peter, 87474 Buchenberg (DE)
(74) Vertreter: Schlögl, Markus

(56) Entgegenhaltungen:
- WO-A2-2013/037453
- DE-A1-102009 049 737
- DE-A1-102012 204 241
- US-A1- 2001 033 800
- US-A1- 2007 286 723
- US-A1- 2010 118 503
- US-A1- 2011 037 331
- US-A1- 2011 115 316
- US-A1- 2013 043 742

## Beschreibung

Die Erfindung betrifft einen elektronisch kommutierten Gleichstrommotor (1), mit einem mit einer mehrphasigen Wicklung (3) bewickelten Stator (4), einem um eine Motorachse (2) drehbar gelagerten Permanentmagnetrotor (5), einer Leiterplatte (6), einem mit der Wicklung (3) elektrisch verbundenem Leitblech (7) und einem Gehäuseteil (8).

Die US2007/286.723 zeigt als Stand der Technik einen elektrischen Pumpenmotor, wobei der Stator mit einer Leiterplatte im Trockenbereich vorliegt. Die Stator-Wicklungsenden sind über Schneid-Klemmverbinder mit der Leiterplatter verbunden, wobei die Verbinder in die Leiterplatte eingepresst sind.

Aufgabe der Erfindung ist es einen einfach mit möglichst wenig Verfahrensschritten herstellbaren Gleichstrommotor bereitzustellen, der eine geringe axiale Baulänge und ein geringes Gewicht, sowie gute Entwärmungseigenschaften aufweist. Weiter ist es Aufgabe der Erfindung einen Gleichstrommotor mit integrierter Elektronik zu schaffen dessen Motorinnenraum ölbefüllbar ist, und die Elektronik gegen dieses Öl abgedichtet aufzunehmen. Aus logistischen Gründen wird zudem angestrebt Teilkomponenten, wie die Elektronik komplett vormontierbar und prüfbar zu gestalten.

Die Aufgabe wird erfindungsgemäß durch die Merkmale des Anspruchs 1 und die Verfahrensmerkmale des Anspruchs 16 gelöst. Die Verschaltung erfolgt nicht im Statorbereich, sondern in der Elektronik, wodurch die Baulänge wesentlich reduziert ist und die Einsatzmöglichkeiten des Gleichstrommotors vergrößert sind. Die Einpresskontakte erlauben ein einfaches lötfreies und prozesssicheres Kontaktieren der Leiterplatte, sie erleichtern auch eine Vormontage- und Vorprüfbarkeit. Durch das öldichte einspritzen oder eingießen eines Mittelteils des Leitblechs wird der Schutz der Leiterplatte vor negativen Wirkungen der Ölfüllung gewährleistet.

Weiterbildungen der Erfindung werden in den Unteransprüchen dargestellt. Durch die Entwärmung über das Kühlblech und die Anschraubaugen, kann die Wärme in ein angeschlossenes Aggregat abgeleitet werden. Daher kann auf einen großflächigen Kühlkörper außerhalb des Gleichstrommotors verzichtet werden. Vorzugsweise ist das Kühlblech durch Befestigungsschrauben fest auf einer Unterlage aufgedrückt, dies verbessert deutlich den Wärmeübergang.

Die Wärmeableitung von der Leiterplatte zum Kühlblech kann durch federnde Mittel verbessert werden. Vorzugsweise sind diese an einem Gehäusedeckel angeordnet, welcher das Elektronikgehäuse nach außen verschließt. Es hat sich gezeigt, dass sich gummiartige Materialien, wie Silikon für diese Funktion besonders gut eignen. Weiter wird vorgeschlagen die Wärmeübertragung von Leistungsbauteilen über Thermal Vias in der Leiterplatte an das Kühlblech zu leiten, wobei diese potentialfrei oder auf Massepotential sind. Für einen optimalen Wärmeübergang sollten die zusammenwirkenden Oberflächen möglichst sauber und glatt sein.

Es ist besonders vorteilhaft das Gehäuseteil als Lagerschild auszubilden, in welchem nach der Montage ein Gleitlager oder vorzugsweise ein Wälzlager aufgenommen ist. Dies reduziert die Teileanzahl gegenüber herkömmlichen Gleichstrommotoren. Das Gehäuse lässt sich somit komplett aus Kunststoff wirtschaftlich herstellen. Es ergibt sich ein wesentlich vereinfachter Fertigungsprozess bei der Montage der Leiterplatte ohne Befestigungsmittel wie Schrauben. Auch ein Vorspannen ist nicht nötig.

Das Leitblech kann mehrere Schneid-Klemm-Kontakte zur Kontaktierung mehrerer Spulen einer Phase aufweisen. Die Schneid-Klemm-Kontakte sind über eine Blechbrücke miteinander einstückig. Es ist vorgesehen die Blechbrücke in das Gehäuseteil einzuspritzen oder einzugießen. Die Funktion dieser Blechbrücke kann alternativ auch die Leiterplatte übernehmen.

Aus verschaltungstechnischen Gründen sind in der Regel mehrere Leitbleche vorgesehen, die voneinander isoliert sind. Dabei können bei sich kreuzenden Blechbrücken abgekröpfte Bereiche hilfreich sein. Ein Leitblech ist bei Sternschaltungen als Sternpunkt-Anschluss vorgesehen.

Bei höheren zu übertragenden Stromwerten kann der Schneid-Klemm-Kontakt sinnvollerweise auch als Doppelkontakt, z. B. in Form von U-förmig gebogenen Blechzungen ausgebildet sein.

Bei einer besonders bevorzugten Ausführungsform der Erfindung sind im Gehäuseteil Anschlusskontakte eingespritzt oder eingegossen, welche sich einerseits nach außen außerhalb des Gehäuseteils erstrecken und andererseits Einpresskontakte bilden, welche parallel zu den Einpresskontakten ausgerichtet und in der gleichen Ebene angeordnet sind. Hierdurch sind auch die Anschlusskontakte öldicht eingebettet und eine Verbindung mit der Leiterplatte ist in einem Arbeitsgang mit der Kontaktierung der Einpresskontakte der Leitbleche möglich.

Im Falle erhöhter Anforderungen an die Öldichtheit ist vorgesehen das Gehäuseteil aus einem spritzgusstechnisch verarbeitbarem Duroplast-Material auszubilden, weil sich gezeigt hat, dass der Verbindungsbereich zwischen dem Kunststoffmaterial und dem Leitblech hierdurch besonders dicht herstellbar ist. Das Gehäuseteil umfasst mehrere Funktionen, es dient als Lagerschild des Motors, als öldichtes Elektronikgehäuse und als Separator zwischen Nassbereich (Gleichstrommotor) und Trockenbereich (Elektronik/Leiterplatte), wobei es eine öldichte Kontaktdurchführung realisiert. Diese Lösung ist wirtschaftlicher und weist ein geringeres Gewicht auf als beispielsweise die Verwendung eines Alu-Flanschs. Auch der Montageaufwand ist deutlich reduziert.

Gemäß einer Weiterbildung der Erfindung wird vorgeschlagen, dass die Leiterplatte (6) in ein dichtendes Material eingebettet ist. Dadurch ist ein besonders guter Schutz der Leiterplatte gegen eindringendes Öl und gegen andere Umwelteinflüsse gegeben.

Vorteilhafterweise sollte die Leiterplatte in das Duroplastmaterial des Gehäuseteils eingebettet sein, um Verfahrensschritte und die Teileanzahl zu minimieren.

Es ist vorgesehen, dass auch in den Trockenraum schließenden Gehäusedeckel Kontaktelemente eines Anschlusssteckers eingespritzt, eingegossen oder eingepresst sind - dies erlaubt eine einfache und sichere Montage des Gehäusedeckels auf das Gehäuseteil. Beide Gehäuseteile bestehen vorzugsweise aus dem gleichen Werkstoff oder zumindest dem gleichen Grundmaterial, z. B. aus Duroplastmaterial.

Um die Elektronik für den Transport ausreichend zu sichern genügt es den Gehäusedeckel über Schnappelemente mit dem Gehäuseteil zu verbinden, in diesem Falle wäre die Verwendung eines Thermoplast-Materials für die Schnappmittel sinnvoller.

Die Aufgabe der Erfindung wird auch durch folgende Verfahrensschritte gelöst: a) Bereitstellen des vorgefertigten Gehäuseteils mit eingespritzten Leitblechen und Kühlblechen, einer bestückten Leiterplatte, einer Deckeldichtung und eines Gehäusedeckels mit eingespritzten Anschlusskontakten eines Anschlusssteckers; b) Einpressen der Leiterplatte in die Einpresskontakte des Gehäuseteils; c) Montage des mit der Deckeldichtung versehenen Gehäusedeckels auf das Gehäuseteil wobei die Leiterplatte mit den Anschlusskontakten elektrisch verbunden wird und damit Herstellung eines Elektronikmoduls; d) Prüfung des Elektronikmoduls; e) Bereitstellung eines Wälzlagers und eines vormontierten Gleichstrommotors; f) Montage des Wälzlagers an das Gehäuseteil; Montage des Elektronikmoduls auf den vorgefertigten Gleichstrommotor und dabei Kontaktierung des Wicklungsdrahts der Statorwicklung.

Nachfolgend wird die Erfindung anhand von Ausführungsbeispielen näher erläutert. Es zeigen:
- Fig. 1: eine Schnittansicht durch einen Gleichstrommotor,
- Fig. 2: eine dreidimensionale Darstellung eines Leitblechs,
- Fig. 3: eine erste Ansicht eines Gehäuseteils,
- Fig. 4: eine zweite Ansicht des Gehäuseteils,
- Fig. 5: eine dritte durchscheinende Ansicht des Gehäuseteils,
- Fig. 6: eine dreidimensionale Darstellung eines Stators,
- Fig. 7: eine Variante zu Fig. 2 und
- Fig. 8: einen Massekontakt.

Hinweis: Bezugszeichen mit Apostroph und entsprechende Bezugszeichen ohne Apostroph bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Apostroph.

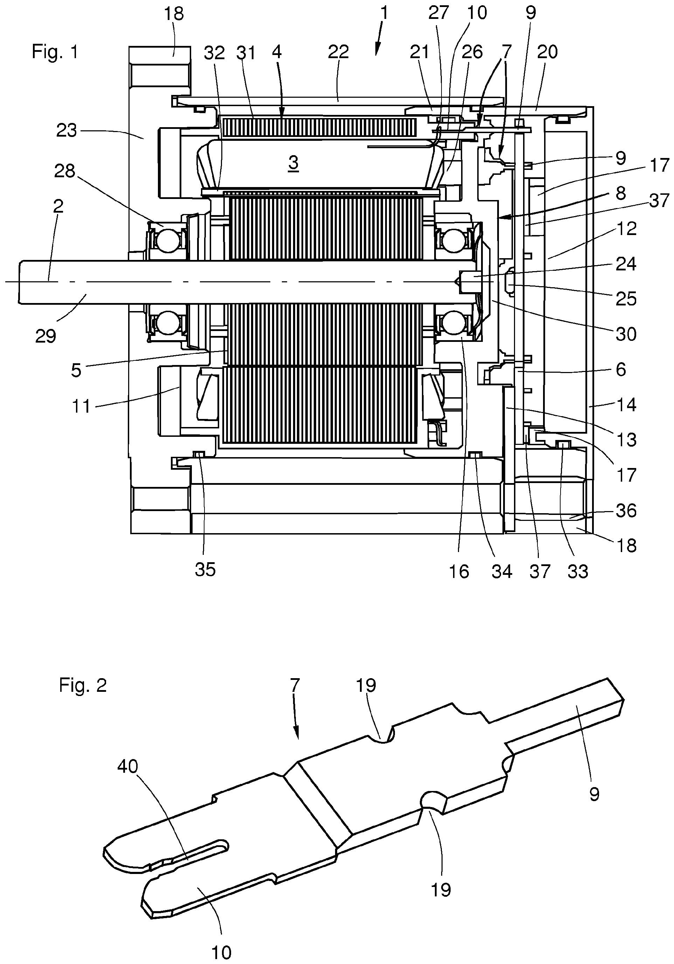

Fig. 1 zeigt eine Schnittansicht durch einen elektronisch kommutierten Gleichstrommotor 1, mit einem Lagerschild 23, einem ersten Lager 28, einem Gehäuseteil 8, das ebenfalls eine Lagerschildfunktion hat, mit einem Wälzlager 16. Im Lager 28 und im Wälzlager 16 ist eine Welle 29 als Bestandteil eines Permanentmagnetrotors 5 drehbar gelagert. Die Welle ist an einem Ende mit einem Gebermagneten 24 verbunden, welcher mit einem Magnetsensor 25 zusammenwirkt. Der Gebermagnet 24 und der Magnetsensor 25 sind durch eine Wandung 30 des Gehäuseteils 8 voneinander getrennt. Der Magnetsensor 25 ist Bestandteil einer Leiterplatte 6, welche in einem Elektronikraum 12 trocken und öldicht aufgenommen ist. Der Elektronikraum 12 wird dabei von einem Gehäusedeckel 14, von der Wandung 30 und einem hohlzylindrischen Elektronikgehäuseabschnitt 20 des Gehäuseteils 8 begrenzt und durch eine Deckeldichtung 33 abgedichtet. Ein Motorraum 11 wird durch ein Motorgehäuse 22, das Lagerschild 23 und das Gehäuseteil 8 gebildet und durch eine Gehäusedichtung 34, sowie eine Lagerschilddichtung 35 abgedichtet. Die Deckeldichtung 33, die Gehäusedichtung 34 und die Lagerschilddichtung 35 sind hier als O-Ring ausgebildet. Der Permanentmagnetrotor 5 wirkt mit einem Stator 4 zusammen, welcher aus einem Statorblechpaket 31 einer Statorisolierung 32 und einer Statorwicklung 3 besteht. Wicklungsdrähte 27 sind mit Schneid-Klemm-Kontakten 10 eines Leitblechs 7 elektrisch verbunden. Mehrere Leitbleche 7 sind im Gehäuseteil 8 öldicht eingebettet, wobei das Gehäuseteil 8 aus einem Duroplastmaterial besteht. Im Elektronikraum 12 sind die Leitbleche 7 als Einpresskontakte ausgebildet und in die Leiterplatte 6 eingepresst. Großflächige Leiterbahnabschnitte der Leiterplatte 6 sind in thermisch leitendem Kontakt mit Kühlblechen 13, welche ebenfalls teilweise in dem Gehäuseteil 8 eingebettet sind. Federnde Mittel 17, z.B. ein Gummiteile sind am Gehäusedeckel 14 angeordnet und drücken auf je ein Leistungsbauteil 37 und damit die Leiterplatte 6 gegen die Kühlbleche 13. Die Kühlbleche 13 treten im Bereich von Anschraubaugen 18 aus dem Gehäuseteil 8 aus und sind an die Form der Anschraubaugen 18 angepasst und bilden eine Anlagefläche zu einer Wärmesenke, z. B. einem Gussgehäuse im Kraftfahrzeug-Motorraum. Die Leistungsbauteile 37 sind auf der Leiterplatte 6 im Bereich der Kühlbleche 13 angeordnet. Dadurch wird die in diesen Leistungsbauteilen entstehende Wärme auf kürzestem Wege über die Leiterbahnabschnitte und die Kühlbleche 13 an das externe Gussgehäuse abgegeben. Weiter verbessert wird die Wärmeübertragung durch Buchsen 36, welche in erster Linie als Verstärkungselemente für die Anschraubaugen 18 dienen, aber zudem Wärme aus den Kühlblechen 13 in Befestigungsschrauben (hier nicht dargestellt) ableiten.

Fig. 2 zeigt eine dreidimensionale Darstellung eines der Leitbleche 7, mit dem Schneid-Klemm-Kontakt 10, dem Einpresskontakt 9 und Auskehlungen 19, welche nach Einbettung im Duroplastmaterial des Gehäuseteils 8 mit diesem eine formschlüssige Verbindung eingeht. Der Einpresskontakt (Kontaktbereich) weist eine größere Blechdicke auf, um eine bessere Biegesteifigkeit zu erreichen. Der Schneid-Klemm-Kontakt 10 weist eine Drahtaufnahme 40 zur Aufnahme und Kontaktierung eines Wicklungsdrahts auf.

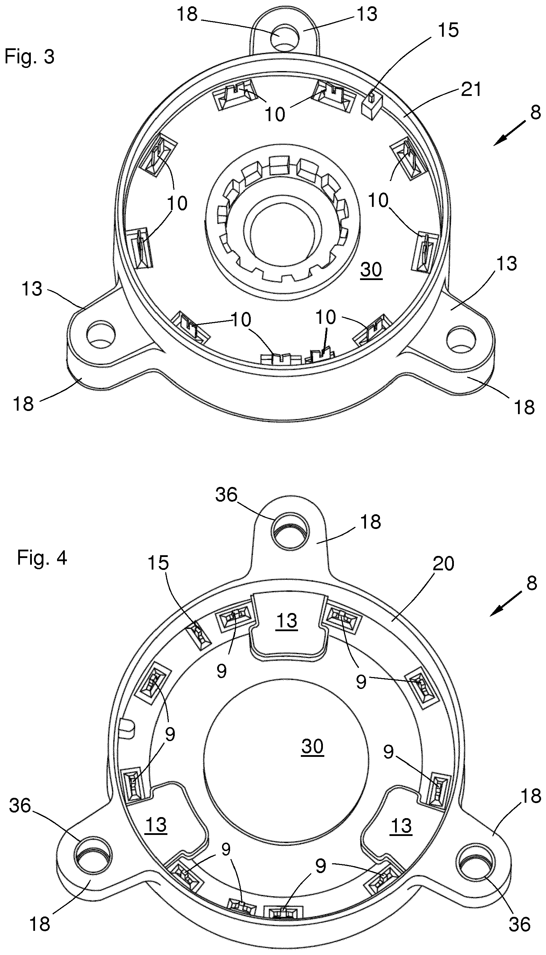

Fig. 3 zeigt eine erste Ansicht des Gehäuseteils 8, mit dem Wälzlager 16, den Schneid-Klemm-Kontakten 10, einem Massekontakt 15, dem hohlzylindrischen Motorgehäuseabschnitt 21, der Wandung 30, den Anschraubaugen 18 und den Kühlblechen 13. Gezeigt ist die Motorseite des Gehäuseteils 8. Hier ist deutlich zu erkennen, dass die Kühlbleche 13 die Anschraubflächen der Anschraubaugen 18 bilden, um die in der Elektronik entstehende Wärme schnell abgeben zu können.

Fig. 4 zeigt eine zweite Ansicht des Gehäuseteils 8, mit den Einpresskontakten 9, dem Massenkontakt 15, dem hohlzylindrischen Elektronikgehäuseabschnitt 20, der Wandung 30, den Anschraubaugen 18 und den Kühlblechen 13, welche hier im Innenbereich des Elektronikgehäuses frei liegen um einen unmittelbaren Kontakt mit Leiterbahnabschnitten der Leiterplatte zu erlauben. Die Kühlbleche 13 sind vorzugsweise federnd ausgebildet um einen zuverlässigen Wärmeübergang zu gewährleisten.

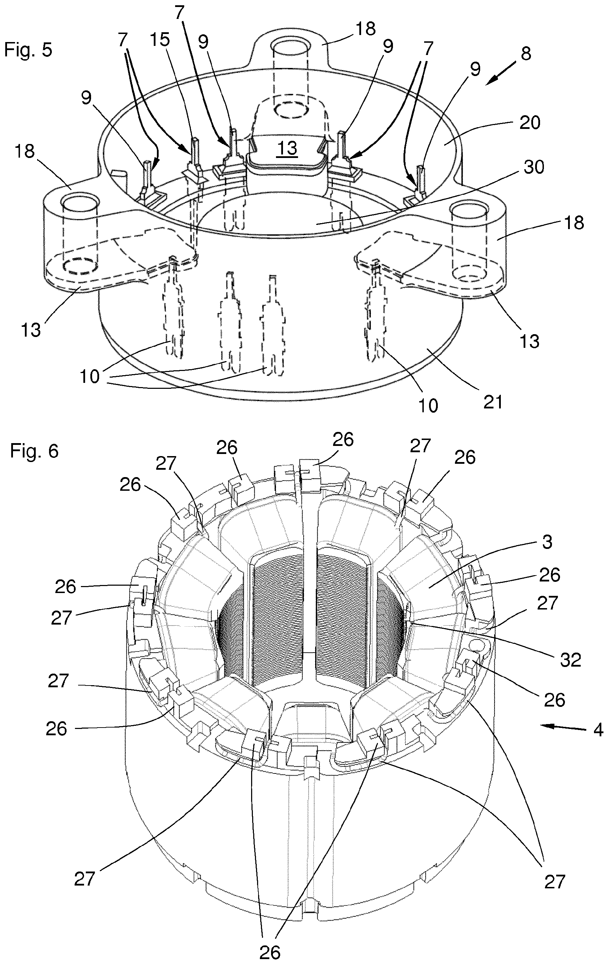

Fig. 5 zeigt eine dritte durchscheinende Ansicht des Gehäuseteils 8, mit dem hohlzylindrischen Elektronikgehäuseabschnitt 20, dem hohlzylindrischen Motorgehäuseabschnitt 21, der Wandung 30, den Anschraubaugen 18, den Kühlblechen 13 und den Leitblechen 7. Die Leitbleche 7 sind hier als Einzelteile ausgebildet mit je einem Einpresskontakt 9 und andererseits einem Schneid-Klemm-Kontakt 10. Alternativ wären auch mehrere Schneid-Klemm-Kontakte möglich. Potentialgleiche Leitbleche können auch durch Leiterbögen miteinander verbunden sein.

Fig. 6 zeigt eine dreidimensionale Darstellung des Stators 4, mit dem Statorblechpaket 31, der Statorisolierung 32, der Statorwicklung 3, dem Wicklungsdraht 27 und Aufnahmeschächten 26 zur Aufnahme der Schneid-Klemm-Kontakte. Die Wicklungsdrähte 27 sind im Kontaktbereich radial verlegt, während die Schneid-Klemm-Kontakte tangential ausgerichtet sind.

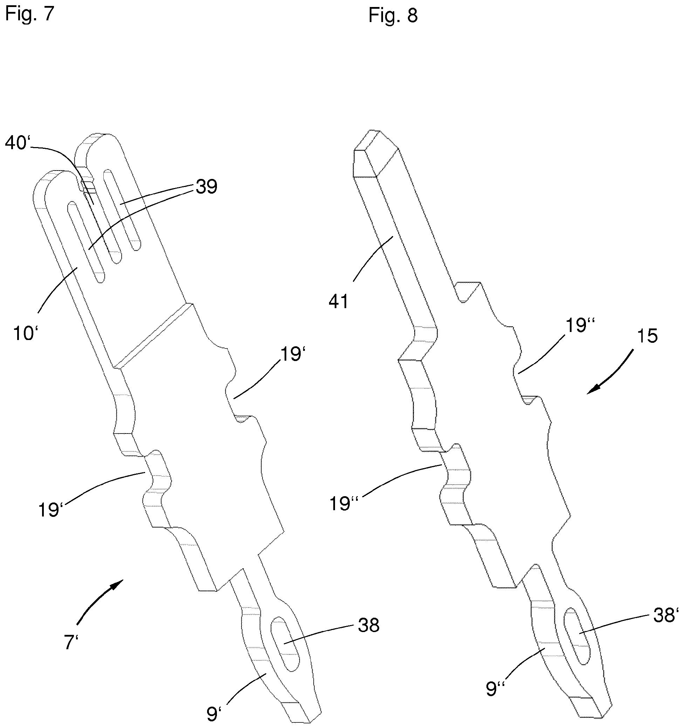

Fig. 7 zeigt eine dreidimensionale Variante zu Fig. 2, mit einem Schneid-Klemm-Kontakt 10', einem Einpresskontakt 9' und Auskehlungen 19', welche nach Einbettung im Duroplastmaterial des Gehäuseteils 8 (Fig. 5) mit diesem eine formschlüssige Verbindung eingeht. Der Einpresskontakt 9' (Kontaktbereich) weist eine größere Blechdicke auf, um eine bessere Biegesteifigkeit zu erreichen. Der Schneid-Klemm-Kontakt 10' weist eine Drahtaufnahme 40' zur Aufnahme und Kontaktierung eines Wicklungsdrahts auf. Zusätzlich sind bei dieser Variante eine Ausnehmung 38 im Einpresskontakt 9' und Schlitze 39 im Schneid-Klemm-Kontakt 10' vorhanden, um die Elastizität des jeweiligen Bereichs zu erhöhen.

Fig. 8 zeigt den Massekontakt 15 (siehe auch Fig. 3-5), welcher zur Herstellung einer elektrischen Verbindung der Leiterplatte zum Stator dient. Der Massekontakt weist einen Kontaktpin 41, Auskehlungen 19" und einen Einpresskontakt 9", mit einer Ausnehmung 38' auf.

**Bezugszeichenliste**

| | | | |
|---|---|---|---|
| 1 | Gleichstrommotor | 29 | Welle |
| 2 | Motorachse | 30 | Wandung |
| 3 | Statorwicklung | 31 | Statorblechpaket |
| 4 | Stator | 32 | Statorisolierung |
| 5 | Permanentmagnetrotor | 33 | Deckeldichtung |
| 6 | Leiterplatte | 34 | Gehäusedichtung |
| 7 | Leitblech | 35 | Lagerschilddichtung |
| 8 | Gehäuseteil | 36 | Buchse |
| 9 | Einpresskontakt | 37 | Leistungsbauteil |
| 10 | Schneid-Klemm-Kontakt | 38 | Ausnehmung |
| 11 | Motorraum | 39 | Schlitz |
| 12 | Elektronikraum | 40 | Drahtaufnahme |
| 13 | Kühlblech | 41 | Kontaktpin |
| 14 | Gehäusedeckel | | |
| 15 | Massekontakt | | |
| 16 | Wälzlager | | |
| 17 | Federnde Mittel (am Deckel) | | |
| 18 | Anschraubaugen | | |
| 19 | Auskehlung | | |
| 20 | Elektronikgehäuseabschnitt | | |
| 21 | Motorgehäuseabschnitt | | |
| 22 | Motorgehäuse | | |
| 23 | Lagerschild | | |
| 24 | Gebermagnet | | |
| 25 | Magnetsensor | | |
| 26 | Aufnahmeschacht | | |
| 27 | Wicklungsdraht | | |
| 28 | Lager | | |

## Patentansprüche

1. Elektronisch kommutierter Gleichstrommotor (1), mit einem mit einer mehrphasigen Statorwicklung (3) bewickelten Stator (4), einem um eine Motorachse (2) drehbar gelagerten Permanentmagnetrotor (5), einer Leiterplatte (6), mehreren mit der Wicklung (3) elektrisch verbundenen Leitblechen (7) und einem Gehäuseteil (8), **dadurch gekennzeichnet, dass** eine Mehrzahl der Leitbleche (7) zumindest einen Einpresskontakt (9) zur elektrischen Verbindung mit der Leiterplatte (6) und zumindest einen Schneid-Klemm-Kontakt (10) zur elektrischen Verbindung mit der Wicklung (3) aufweist, ein Mittelteil der Leitbleche (7) zwischen Schneid-Klemm-Kontakt (10) und Einpresskontakt (9) im Gehäuseteil (8) öldicht eingespritzt oder eingegossen ist, die Schneid-Klemm-Kontakte (10) sich achsparallel in einen ölgefüllten oder mit Öl befüllbaren Motorraum (11) und die Einpresskontakte (9) sich achsparallel in einen Trockenraum (12) erstrecken, in welchem die Leiterplatte (6) angeordnet und die Einpresskontakte (9) in die Leiterplatte (6) eingepresst sind.

2. Gleichstrommotor nach Anspruch 1, **dadurch gekennzeichnet, dass** potentialfreie Vias der Leiterplatte (6) mit einem Kühlblech (13) wärmeleitend verbunden sind oder an einem Kühlblech (13) wärmeleitend anliegen.

3. Gleichstrommotor nach Anspruch 2, **dadurch gekennzeichnet, dass** das Kühlblech (13) sich radial nach außen bis in den Bereich von Anschraubaugen (18) erstreckt.

4. Gleichstrommotor nach Anspruch 2 oder 3, **dadurch gekennzeichnet, dass** die Leiterplatte (6) federnd an das Kühlblech (13) anliegt oder an diese angedrückt ist.

5. Gleichstrommotor nach Anspruch 4, **dadurch gekennzeichnet, dass** der Trockenraum (12) durch einen Gehäusedeckel (14) verschlossen ist, an welchem zumindest ein federndes Mittel (17) zum Andrücken der Leiterplatte (6) an das Kühlblech (13) angeordnet ist.

6. Gleichstrommotor nach Anspruch 5, **dadurch gekennzeichnet, dass** das federnde Mittel (17) aus einem gummiartigen Material, insbesondere Silikon-Material besteht.

7. Gleichstrommotor nach zumindest einem der vorangehenden Ansprüche, **dadurch gekennzeichnet, dass** das Gehäuseteil (8) ein Lagerschild ist in welchem im Endmontagezustand ein Wälzlager (16) aufgenommen ist, dessen Außenring mit der Aufnahme des Gehäuseteils (8) einen Schiebesitz bildet.

8. Gleichstrommotor nach zumindest einem der vorangehenden Ansprüche, **dadurch gekennzeichnet, dass** das Leitblech (7) aus einer Mehrzahl von Schneid-Klemm-Kontakten besteht, die über zumindest eine Blechbrücke miteinander einstückig sind, wobei die Blechbrücke in das Gehäuseteil (8) eingespritzt oder eingegossen ist.

9. Gleichstrommotor nach zumindest einem der vorangehenden Ansprüche, **dadurch gekennzeichnet, dass** eine Mehrzahl von zueinander elektrisch isolierten Leitblechen (7) vorgesehen sind.

10. Gleichstrommotor nach zumindest einem der vorangehenden Ansprüche, **dadurch gekennzeichnet, dass** ein Leitblech als Sternpunkt-Anschluss und die übrigen Leitbleche als Phasen-Anschlüsse dienen.

11. Gleichstrommotor nach zumindest einem der vorangehenden Ansprüche, **dadurch gekennzeichnet, dass** die Schneid-Klemm-Kontakte (10) und/oder die Einpresskontakte (9) in Form von Doppelkontakten ausgebildet sind.

12. Gleichstrommotor nach zumindest einem der vorangehenden Ansprüche, **dadurch gekennzeichnet, dass** die Wicklung (3) mit Hilfe der Leitbleche (7) oder mit Hilfe von Leiterbahnen der Leiterplatte (6) miteinander verschaltet sind.

13. Gleichstrommotor nach zumindest einem der vorangehenden Ansprüche, **dadurch gekennzeichnet, dass** im Gehäuseteil (8) Anschlusskontakte eingespritzt oder eingegossen sind, welche sich einerseits nach außen außerhalb des Gehäuseteils (8) erstrecken und andererseits Einpresskontakte bilden, welche parallel zu den Einpresskontakten (9) ausgerichtet und in der gleichen Ebene angeordnet sind.

14. Gleichstrommotor nach zumindest einem der vorangehenden Ansprüche, **dadurch gekennzeichnet, dass** das Gehäuseteil (8) aus einem spritzgusstechnisch verarbeitbarem Duroplast-Material besteht.

15. Gleichstrommotor nach zumindest einem der vorangehenden Ansprüche, **dadurch gekennzeichnet, dass** die Leiterplatte (6) in ein dichtendes Material eingebettet ist.

16. Gleichstrommotor nach Anspruch 14 und 15, **dadurch gekennzeichnet, dass** die Leiterplatte (6) in das Duroplastmaterial des Gehäuseteils (8) eingebettet ist.

17. Gleichstrommotor nach zumindest einem der vorangehenden Ansprüche, **dadurch gekennzeichnet, dass** der Gehäusedeckel (14) über Schnappelemente mit dem Gehäuseteil (8) verbunden ist.

18. Verfahren zur Herstellung eines elektronisch kommutierter Gleichstrommotors (1), mit einem mit einer mehrphasigen Statorwicklung (3) bewickelten Stator (4), einem um eine Motorachse (2) drehbar gelagerten Permanentmagnetrotor (5), einer rechtwinklig zur Motorachse angeordneten Leiterplatte (6), mehreren mit der Wicklung (3) elektrisch verbundenen Leitblechen (7) und einem Gehäuseteil (8), **gekennzeichnet durch** folgende Verfahrensschritte: a) Bereitstellen des vorgefertigten Gehäuseteils (8) mit eingespritzten Leitblechen (7) und Kühlblechen (13), einer bestückten Leiterplatte (6), einer Deckeldichtung (33) und eines Gehäusedeckels (14); b) Einpressen der Leiterplatte in die Einpresskontakte (9) des Gehäuseteils (8); c) Montage des mit der Deckeldichtung (33) versehenen Gehäusedeckels (14) auf das Gehäuseteil (8) und damit Herstellung eines Elektronikmoduls; d) Prüfung des Elektronikmoduls; e) Bereitstellung eines vormontierten Gleichstrommotors; f); Montage des Elektronikmoduls auf den vorgefertigten Gleichstrommotor (1) und dabei Kontaktierung der des Wicklungsdrahts (27) der Statorwicklung (3).

## Claims

1. Electronically commutated DC motor (1) with a stator (4) wound with a multi-phase stator winding (3), a permanent magnet rotor (5) mounted rotatably about a motor axis (2), a circuit board (6), a plurality of guide plates (7) electrically connected to the winding (3) and a housing component (8), **characterized in that** a majority of the guide plates (7) comprise at least one press-fit contact (9) for electrical connection to the circuit board (6) and at least one insulation displacement contact (10) for electrical connection to the winding (3), a central part of the guide plate (7) between the insulation displacement contact (10) and the press-fit contact (9) in the housing component (8) is cast or injection-moulded to be oil-tight, the insulation displacement contacts (10) extend parallel to the axis in an oil-filled or oil-fillable motor compartment (11), and the press-fit contacts (9) extend parallel to the axis in a dry compartment (12) in which the circuit board (6) is arranged and the press-fit contacts (9) are pressed into the circuit board (6).

2. DC motor according to Claim 1, **characterized in that** insulated vias of the circuit board (6) are joined thermally conductively with a cooling plate (13) or lie thermally conductively against a cooling plate (13).

3. DC motor according to Claim 2, **characterized in that** the cooling plate (13) extends radially outwards in the region of mounting bosses (18).

4. DC motor according to Claim 2 or 3, **characterized in that** the circuit board (6) lies sprung against the cooling plate (13) or is pressed onto it.

5. DC motor according to Claim 4, **characterized in that** the dry compartment (12) is closed by a housing cover (14) on which at least one elastic means (17) is arranged to press the circuit board (6) onto the cooling plate (13).

6. DC motor according to Claim 5, **characterized in that** the elastic means (17) consists of a rubber-like material, in particular a silicone material.

7. DC motor according to at least one of the previous claims, **characterized in that** the housing component (8) is a bearing plate in which, in the fully assembled state, a roller bearing (16) is held whose outer ring forms a sliding seat with the receptacle of the housing component (8).

8. DC motor according to at least one of the previous claims, **characterized in that** the guide plate (7) consists of a plurality of insulation displacement contacts which are joined into one piece by at least one metal bridge, wherein the metal bridge is injected or cast into the housing component (8).

9. DC motor according to at least one of the previous claims, **characterized in that** a plurality of mutually electrically isolated guide plates (7) is provided.

10. DC motor according to at least one of the previous claims, **characterized in that** one guide plate acts as a neutral point terminal and the other guide plates as phase terminals.

11. DC motor according to at least one of the previous claims, **characterized in that** the insulation displacement contacts (10) and/or the press-fit contacts (9) are constructed in the form of double contacts.

12. DC motor according to at least one of the previous claims, **characterized in that** the winding (3) are connected together with the aid of the guide plates (7) or with the aid of conductive tracks of the circuit board (6).

13. DC motor according to at least one of the previous claims, **characterized in that** connecting contacts are injected or cast into the housing component (8), extending at one end outwards outside the housing component (8) and at the other end forming press-fit contacts that are aligned parallel to the press-fit contacts (9) and are arranged in the same plane.

14. DC motor according to at least one of the previous claims, **characterized in that** the housing component (8) consists of a thermosetting material that can be processed using injection-moulding technology.

15. DC motor according to at least one of the previous claims, **characterized in that** the circuit board (6) is embedded into a sealing material.

16. DC motor according to Claims 14 and 15, **characterized in that** the circuit board (6) is embedded into the thermosetting material of the housing component (8).

17. DC motor according to at least one of the previous claims, **characterized in that** the housing cover (14) is connected to the housing component (8) by snap-fastening elements.

18. Method for the manufacture of an electronically commutated DC motor (1) with a stator (4) wound with a multi-phase stator winding (3), a permanent magnet rotor (5) mounted rotatably about a motor axis (2), a circuit board (6) arranged at right angles to the motor axis, a plurality of guide plates (7) electrically connected to the winding (3) and a housing component (8), **characterized by** the following process steps: a) provision of the previously fabricated housing component (8) with injected guide plates (7) and cooling plates (13), a populated circuit board (6), a cover seal (33) and a housing cover (14); b) pressing the circuit board into the press-fit contacts (9) of the housing component (8); c) mounting the housing cover (14) provided with the cover seal (33) onto the housing component (8) thereby fabricating an electronic module; d) testing the electronic module; e) providing a pre-assembled DC motor; f); mounting the electronic module onto the prefabricated DC motor (1) and thereby contacting the the winding wire (27) of the stator winding (3).

## Revendications

1. Moteur à courant continu commuté électroniquement (1), avec un stator (4) enroulé avec un enroulement de stator multi-phase (3), un rotor à aimant permanent (5) logé de manière rotative autour d'un axe du moteur (2), un circuit imprimé (6), plusieurs déflecteurs (7) reliés électriquement avec l'enroulement (3) et une partie de boîtier (8), **caractérisé en ce qu'**une pluralité de déflecteurs (7) comprend au moins un contact par pression (9) pour la liaison électrique avec le circuit imprimé (6) et au moins un contact auto-dénudant (10) pour la liaison électrique avec l'enroulement (3), une partie centrale des déflecteurs (7) étant injectée ou moulée entre le contact auto-dénudant (10) et le contact par pression (9) de manière étanche aux huiles dans la partie de boîtier (8), les contacts auto-dénudants (10) s'étendant de manière parallèle dans un espace de moteur (11) rempli d'huile ou pouvant être rempli d'huile et les contacts par pression (9) s'étendant de manière parallèle dans un espace sec (12), dans lequel le circuit imprimé (6) est disposé et les contacts par pression (9) sont insérés dans le circuit imprimé (6).

2. Moteur à courant continu selon la revendication 1, **caractérisé en ce que** des pistes sans potentiel du circuit imprimé (6) sont reliées avec conduction de chaleur avec une tôle de refroidissement (13) ou s'appuient avec une conduction de chaleur contre la tôle de refroidissement (13).

3. Moteur à courant continu selon la revendication 2, **caractérisé en ce que** la tôle de refroidissement (13) s'étend radialement vers l'extérieur jusqu'au niveau d'oeillets de vissage (18).

4. Moteur à courant continu selon la revendication 2 ou 3, **caractérisé en ce que** le circuit imprimé (6) s'appuie de manière amortie contre la tôle de refroidissement (13) ou est comprimé contre celle-ci.

5. Moteur à courant continu selon la revendication 4, **caractérisé en ce que** l'espace sec (12) est fermé par un couvercle de boîtier (14) sur lequel est disposé au moins un moyen d'amortissement (17) pour la compression du circuit imprimé (6) contre la tôle de refroidissement (13).

6. Moteur à courant continu selon la revendication 5, **caractérisé en ce que** le moyen d'amortissement (17) est constitué d'un matériau de type caoutchouc, plus particulièrement d'un matériau de type silicone.

7. Moteur à courant continu selon au moins l'une des revendications précédentes, **caractérisé en ce que** la partie de boîtier (8) est une protection de palier dans laquelle, dans l'état final de montage, est logé un palier à rouleaux (16) dont la bague externe forme, avec le logement de la partie de boîtier (8), un siège coulissant.

8. Moteur à courant continu selon au moins l'une des revendications précédentes, **caractérisé en ce que** le déflecteur (7) est constitué d'une pluralité de contacts auto-dénudants qui sont reliés en une seule pièce par l'intermédiaire d'au moins un pont en tôle, le pont en tôle étant injecté ou moulé dans la partie de boîtier (8).

9. Moteur à courant continu selon au moins l'une des revendications précédentes, **caractérisé en ce qu'**une pluralité de déflecteurs (7) isolés électriquement entre eux sont prévus.

10. Moteur à courant continu selon au moins l'une des revendications précédentes, **caractérisé en ce qu'**un déflecteur sert de raccord de point neutre et les autres déflecteurs servent de raccords de phase.

11. Moteur à courant continu selon au moins l'une des revendications précédentes, **caractérisé en ce que** les contacts auto-dénudants (10) et/ou les contacts par pression (9) sont conçus sous la forme de doubles contacts.

12. Moteur à courant continu selon au moins l'une des revendications précédentes, **caractérisé en ce que** les enroulements (3) sont branchés entre eux à l'aide des déflecteurs (7) ou à l'aide de pistes conductrices du circuit imprimé (6).

13. Moteur à courant continu selon au moins l'une des revendications précédentes, **caractérisé en ce que**, dans la partie de boîtier (8), sont injectés ou moulés des contacts de raccordement, qui d'une part s'étendent vers l'extérieur hors de la partie de boîtier (8) et d'autre part constituent des contacts par pression qui sont orientés parallèlement aux contacts par pression (9) et sont disposés dans le même plan.

14. Moteur à courant continu selon au moins l'une des revendications précédentes, **caractérisé en ce que** la partie de boîtier (8) est constituée d'une matière plastique thermodurcissable pouvant être moulée par injection.

15. Moteur à courant continu selon au moins l'une des revendications précédentes, **caractérisé en ce que** le circuit imprimé (6) est intégré dans un matériau étanche.

16. Moteur à courant continu selon au moins l'une des revendications précédentes, **caractérisé en ce que** le circuit imprimé (6) est intégré dans la matière plastique thermodurcissable de la partie de boîtier (8).

17. Moteur à courant continu selon au moins l'une des revendications précédentes, **caractérisé en ce que** le couvercle du boîtier (14) est relié avec la partie de boîtier (8) par l'intermédiaire d'éléments d'encliquetage.

18. Procédé de fabrication d'un moteur à courant continu commuté électroniquement (1), avec un stator (4) enroulé avec un enroulement de stator multi-phase (3), un rotor à aimant permanent (5) logé de manière rotative autour d'un axe du moteur (2), un circuit imprimé (6), plusieurs déflecteurs (7) reliés électriquement avec l'enroulement (3) et une partie de boîtier (8), **caractérisé par** les étapes suivantes : a) préparation de la partie de boîtier (8) préfabriquée avec des déflecteurs (7) et des tôles de refroidissement (13) injectés, d'un circuit imprimé (6) équipé, d'un joint d'étanchéité de couvercle (33) et d'un couvercle de boîtier (14) ; b) compression du circuit imprimé dans les contacts par pression (9) de la partie de boîtier (8) ; c) montage du couvercle de boîtier (14) muni du joint d'étanchéité de couvercle (33) sur la partie de boîtier (8) et fabrication d'un module électronique ; d) vérification du module électronique ; e) préparation d'un moteur à courant continu pré-monté ; f) montage du module électronique sur le moteur à courant continu préfabriqué (1) et mise en contact du fil d'enroulement (27) de l'enroulement du stator (3).
